# EUROPEAN PATENT SPECIFICATION

(11) **EP 4 172 073 B1**
(45) Date of publication and mention of the grant of the patent: **17.09.2025**
(21) Application number: 21735234.3
(22) Date of filing: 18.06.2021
(51) Int. Cl.: B65G 1/04

(54) **AUTOMATED STORAGE AND RETRIEVAL SYSTEM FOR STORING FRESH FOOD AND PRODUCE**
AUTOMATISIERTES LAGERUNGS- UND ENTNAHMESYSTEM ZUR LAGERUNG VON FRISCHEN LEBENSMITTELN UND PRODUKTEN
SYSTÈME DE STOCKAGE ET DE RÉCUPÉRATION AUTOMATISÉ POUR STOCKER DES ALIMENTS ET PRODUITS FRAIS

(30) Priority: 26.06.2020 NO 20200756
(43) Date of publication of application: 03.05.2023
(60) Divisional application: 25195524.1
(73) Proprietor: AUTOSTORE TECHNOLOGY AS, 5578 Nedre Vats (NO)
(72) Inventor: MÆHLE, Ole, Alexander, 5590 ETNE (NO)
(74) Representative: Kilburn & Strode LLP
(86) International application number: PCT/EP2021/066627
(87) International publication number: WO 2021/259796

(56) References cited:
- WO-A1-2019/101725
- WO-A1-2020/011355
- CA-A1- 3 111 695
- GB-A- 2 541 775
- US-B2- 10 604 343

## Description

### FIELD OF THE INVENTION

The present invention relates to an automated storage and retrieval system for storage and retrieval of containers, in particular for storing fresh food and produce.

### BACKGROUND AND PRIOR ART

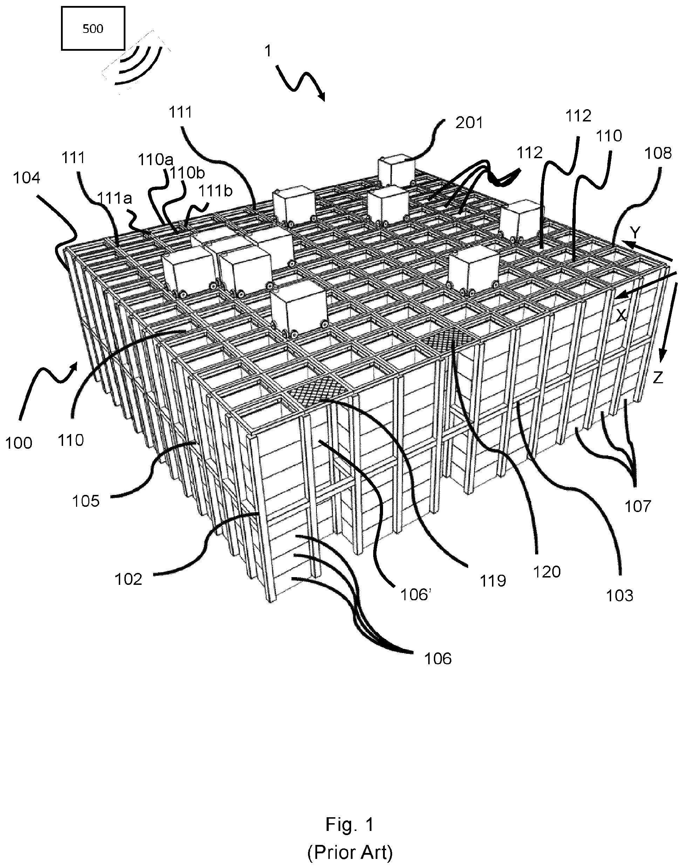

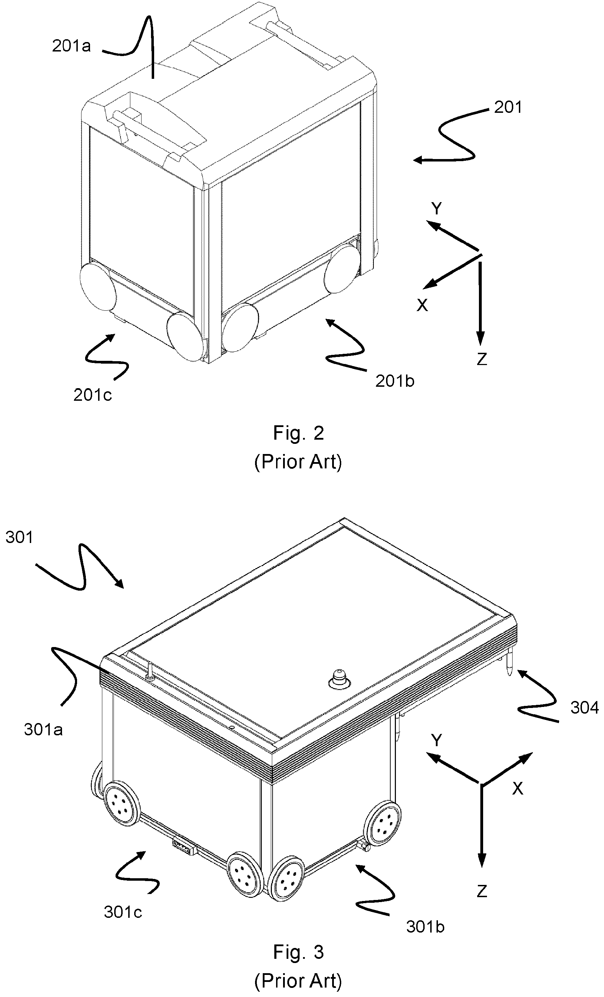

Fig. 1 discloses a typical prior art automated storage and retrieval system 1 with a framework structure 100 and Fig. 2 and 3 disclose two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are into, the storage columns 105, and also to transport the storage containers 106 above the storage columns 105. The rail system 108 comprises a first set of parallel rails 110 arranged to guide movement of the container handling vehicles 201,301 in a first direction X across the top of the frame structure 100, and a second set of parallel rails 111 arranged perpendicular to the first set of rails 110 to guide movement of the container handling vehicles 201,301 in a second direction Y which is perpendicular to the first direction X. Containers 106 stored in the columns 105 are accessed by the container handling vehicles through access openings 112 in the rail system 108. The container handling vehicles 201,301 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the X direction and in the Y direction, respectively. In Fig. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device (not shown) for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301 so that the position of the gripping / engaging devices with respect to the vehicle 201,301 can be adjusted in a third direction Z which is orthogonal the first direction X and the second direction Y. Parts of the gripping device of the container handling vehicle 301 are shown in fig. 3 indicated with reference number 304. The gripping device of the container handling device 201 is located within the vehicle body 301a in Fig. 2.

Conventionally, and also for the purpose of this application, Z=1 identifies the uppermost layer of storage containers, i.e. the layer immediately below the rail system 108, Z=2 the second layer below the rail system 108, Z=3 the third layer etc. In the exemplary prior art disclosed in Fig. 1, Z=8 identifies the lowermost, bottom layer of storage containers. Similarly, X=1...n and Y=1...n identifies the position of each storage column 105 in the horizontal plane. Consequently, as an example, and using the Cartesian coordinate system X, Y, Z indicated in Fig. 1, the storage container identified as 106' in Fig. 1 can be said to occupy storage position X=10, Y=2, Z=3. The container handling vehicles 201,301 can be said to travel in layer Z=0, and each storage column 105 can be identified by its X and Y coordinates.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y and Z-direction

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1.

Fig. 3 shows an alternative configuration of a container handling vehicle 301 with a cantilever construction. Such a vehicle is described in detail in e.g. NO317366.

The central cavity container handling vehicles 201 shown in Fig. 2 may have a footprint that covers an area with dimensions in the X and Y directions which is generally equal to the lateral extent of a storage column 105, e.g. as is described in WO2015/193278A1.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018146304, illustrates a typical configuration of rail system 108 comprising rails and parallel tracks in both X and Y directions.

In the framework structure 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

Some products require special storage conditions to avoid quality reduction and decomposing. Examples of such products are fresh food and produce, which are temperature sensitive and should be stored within a temperature interval of 0,5 to 8°C, typically at about 4°C. In addition, some products, such as herbs, vegetables, fruit etc. may require a fresh air supply.

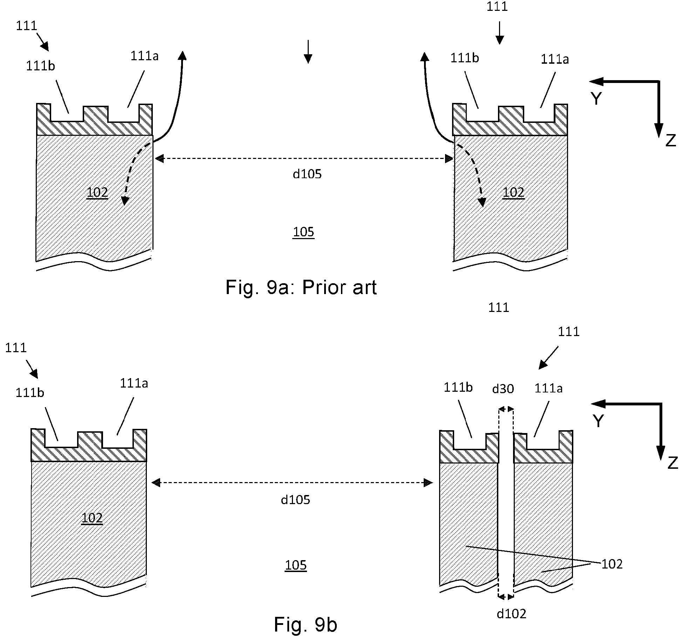

As shown in fig. 9a, air may circulate between storage containers in the prior art system 1. As indicated by the two-way arrows, air may circulate between the two posts 102 (dashed part of arrows) and up through the access opening 112 (solid part of arrows) between the rails 111. However, this air flow is limited.

WO2016193419 describes an automated storage and retrieval system in which the temperature is adjusted, regulated, controlled and/or maintained. The storage containers have ventilation openings in two or more side walls. The storage system has compartments on the respective sides of the storage system and also below the storage system to allow air circulation and to control temperature.

GB 2 541 775 describes a container having four sides and a base, two of the sides include a series of apertures. These apertures could be used as vents to allow cool air to chill the contents of the box. Over 50% or 60% of the height of the walls could be free from vents. The box could be made from polypropylene, HDPE, PET or another plastic. Further boxes with vent holes could be received in this first container so that the vent holes of the inner and outer boxes align. Ideally the inner box contains bags. The containers could be used in a greenhouse or parcel sorting system. GB2 541 775 A was identified by the EPO in the examination procedure as the 'closest prior art'.

US 10 604 343 discloses bins or other storage units contained within a three-dimensional grid structure are arranged in cells, each of which has multiple storage units surrounding a central void or space on different sides thereof. This void space is slightly larger than each storage unit, enabling the unit to be pulled into the void by mechanical means, and allowing access to the bins on all sides of the void. The storage units are stacked within the three-dimensional grid structure, which can be built or expanded to a predetermined footprint. The aligned voids of stacked cells create vertical shafts spanning between upper and lower tracks of the grid structure on which robotic retrieval vehicles can horizontally travel to and from any given shaft. The robotic retrieval vehicles can directly access any storage unit via the vertical shafts.

WO 2020/011355 describes a storage system comprises a plurality of vertical stacks of storage containers. The stacks are arranged in a horizontal first direction and a horizontal second direction which is perpendicular to the first direction. The upper sides of the stacks lie in a top plane. The storage system also comprises a transport unit for transporting at least one container to or from a selected stack in the first and/or second direction, and a container handling device for transferring at least an upper container from a selected stack to the transport unit before the transport unit including the container is transported from said selected stack and for transferring at least a container from the transport unit to the top of a selected stack after the transport unit including the container is transported to said selected stack. The transport unit is directly supported by upper containers of the stacks.

One object is to provide an automated storage and retrieval system in which fresh food and produce can be stored efficiently. Another object is that the fresh food and produce can be stored in a desired environment (i.e. at desired temperature and in desired air quality).

One further object is that the also other products may be stored in the same storage system.

### SUMMARY OF THE INVENTION

The present invention relates to a automated storage and retrieval system for storing product items according to claim 1.

The term "adjacent tracks" here refers to two separate tracks between two adjacent columns or row of columns, where one of the tracks are used by a vehicle moving above one of the adjacent columns and where the other one of the tracks are used by a vehicle moving above the second one of the adjacent columns.

In one example, the ventilated storage container comprises ventilation openings in at least a side wall facing towards the ventilation slot when located in a storage column adjacent to the ventilation slot.

In one example, the ventilated storage containers comprise ventilation openings in one side wall only, the one side wall having ventilation openings being faced towards the ventilation slot when located in a storage column adjacent to the ventilation slot

Alternatively, the ventilated storage containers comprise ventilation openings in two side walls only, the two side walls being opposite side walls and where one of the two side walls has openings being faced towards the ventilation slot when located in a storage column adjacent to the ventilation slot.

In one example, the ventilation slot has a width in a first horizontal direction of 5 - 20 %, of the width in the first horizontal direction of the adjacent storage column.

In one example, the framework structure comprises one ventilation slot for every second storage column.

In one example, the framework structure comprises one ventilation slot for every second storage column in the first horizontal direction.

In one example, a first area of the framework structure comprises one ventilation slot for every second storage column; and a second area of the framework structure is provided without ventilation slots between adjacent tracks; and the container handing vehicles are movable along the rail system between first and second areas.

In one example, the control system is configured to:
- determine the location of the ventilation openings of the ventilated storage container based on the unique identifier before the storage position is determined.

In one aspect, at least one of the container handling vehicles comprises a lifting device with a gripping unit, the lifting device with gripping unit being rotatably connected with respect to its first and second sets of wheels.

In one example, a first track of the adjacent tracks are used by a vehicle moving above one of the adjacent columns and where a second track of the adjacent tracks are used by a vehicle moving above the second one of the adjacent columns.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilever for carrying storage containers underneath.
Fig. 4 shows a rail system of a prior art storage and retrieval system from above.
Fig. 5 shows a rail system of an embodiment of the present storage and retrieval system from above.
Fig. 6a shows a stack of three storage containers.
Fig. 6b shows the stack in fig. 6a turned 180°.
Fig. 7 illustrates how the storage containers are stacked above each other in the storage system of fig. 5.
Fig. 8 is an enlarged view of the dashed box DB of fig. 7.
Fig. 9a-b illustrates side views of the upper parts of the framework structure.
Fig. 10 illustrates a combination of the prior art system of fig. 4 and the system of fig. 5;
Fig. 11a and 11b illustrates a container handling vehicle where the container lifting device can be rotated.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3, i.e. a number of upright members 102 and a number of horizontal members 103, which are supported by the upright members 102, and further that the framework structure 100 comprises a rail system 108 in the X direction and Y direction.

The framework structure 100 further comprises storage compartments in the form of storage columns 105 provided between the members 102, 103, where storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700x700 columns and a storage depth of more than twelve containers.

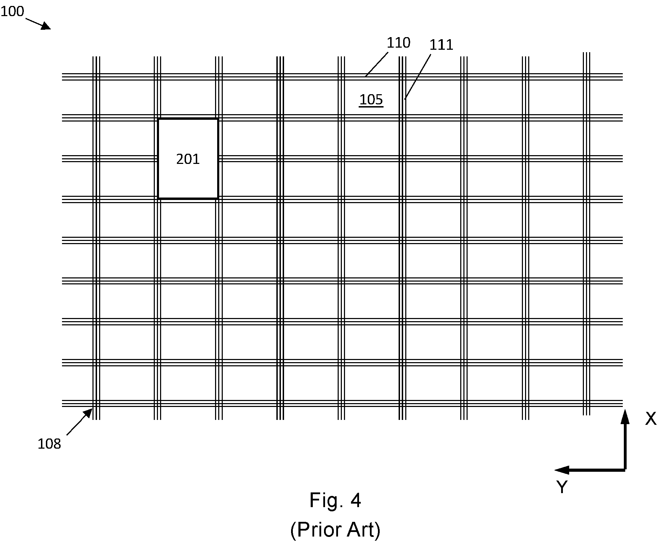

In fig. 4, a prior art framework structure 100 is shown from above. As the members 102, 103 are provided under the rails 110, 111 of the rail system 108, only the rails 110, 111 are visible in fig. 4. In addition, the storage columns 105 are here for simplicity shown empty, i.e. there are no storage containers stacked above each other within the storage columns 105.

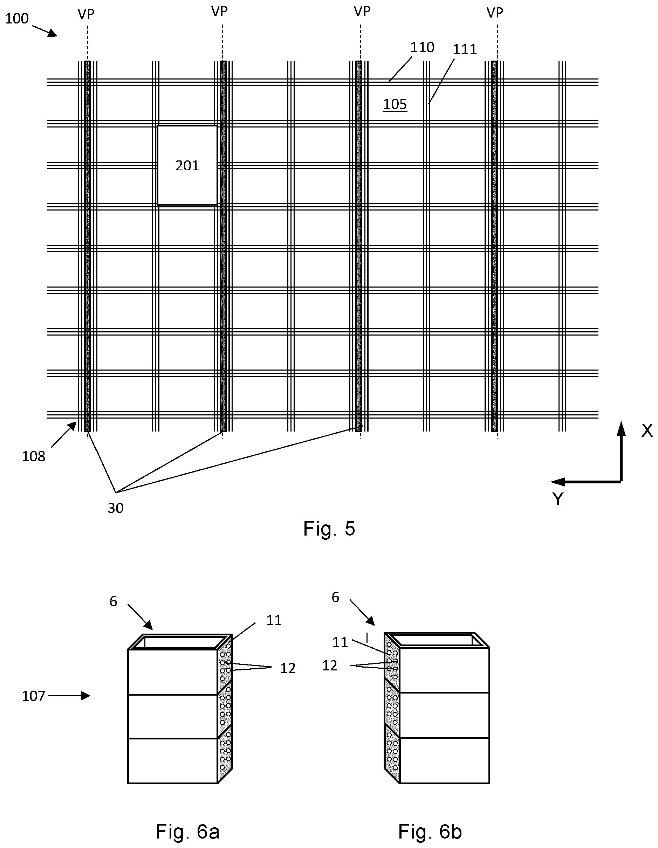

First, it is referred to fig. 6a and 6b, where a stack 107 of three storage containers 6 are stacked above each other. Each storage container 6 comprises ventilation openings 12 in one of the four side walls 11 of the storage container 6. In fig. 6a, the ventilation openings 12 are provided on the right side of the storage container 6, while in fig. 6b, the ventilation openings 12 are provided on the left side of the storage containers 6. These storage containers 6 are hereinafter referred to as ventilated storage containers.

It should be noted that the ventilated storage containers 6 in fig. 6a and fig. 6b are identical to each other, but rotated 180° around a vertical axis (Z-direction) with respect to each other.

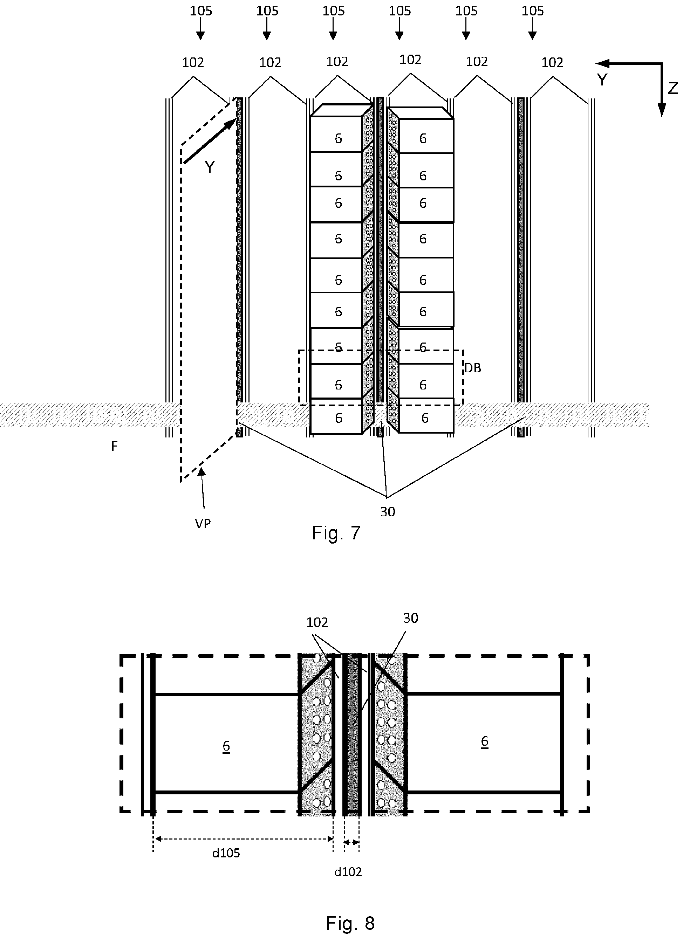

It is now referred to fig. 5 (top view) and fig. 7 (side view). By using the coordinate system of the drawings, rows of storage columns are extending in the X-direction, and these rows of storage columns are placed next to each other in the Y-direction. The storage containers 6 are stacked above each other in the Z-direction.

The rail system 108 of the framework structure 100 comprises a ventilation slot 30 extending in a vertical plane VP between two adjacent rows of storage columns, i.e. the vertical plane VP is extending in the X-direction and in the Z-direction. The ventilation slot 30 is provided between two vertical members 102 of the framework structure 100, as shown in fig 8.

It is now referred to fig. 9b. On the left side, the rail 111 with its two adjacent tracks 111b, 111a is located above the vertical member 102, which is identical to the prior art configuration shown in fig. 9a. On the right side, there are two spaced apart vertical members 102 below the rail 111, separated by the ventilation slot 30.

Moreover, also the adjacent tracks 111b, 111a of the left-side rail 111 is separated by the ventilation slot 30.

The ventilation slot 30 has a width d30 in the Y-direction. The width d30 of the ventilation slot 30 is here indicated as the distance the air can flow between the tracks 111b, 111a. The width of the ventilation slot 30 between the vertical members 102 are indicated as d102. Preferably, the width d102 is equal to, or substantially equal to, the width d30 of the ventilation slot 30.

In the present embodiment, the ventilation slot 30 has a width d30 of 5 cm. This storage system is dimensioned for storage containers having a length of 60 cm (Y-direction) and a width of 40 cm (X-direction). The width and length of the storage column is slightly larger than the width and length of the storage container. Preferably, width d30 of the ventilation slot 30 is between 3 - 12 cm.

Hence, according to the above, the ventilation slot 30 is extending across the rail system. However, it should be noted that the vertical members 102 of fig. 9b will be mechanically secured to each other in similar ways to fig. 9a, i.e. by means of horizontal posts and rails 110 in the Y-direction. The rails 110 in the Y-direction will therefore bridge the ventilation slot 30 at intervals in the X-direction to allow the vehicles to pass the ventilation gap.

In fig. 9a and fig. 9b, a container handling vehicle arranged to collect a storage container from the storage column 105 will use track 111a on the left-side rail 111 and track 111b on the right-side rail 111 when driving in the X-direction (i.e., into the image). A cantilever-type of container handling vehicle 301 (fig. 3) will have its wheels lowered into rails 110 in the Y-direction when elevating/lowering storage containers 6, 106 into the compartment 105, while its wheels used for driving in the X-direction will be elevated, assuming that the cantilever structure is protruding in the X-direction with respect to the vehicle body (as shown in fig. 5) . A single-cell type of container handling vehicle 201 (fig. 2) may have its wheels lowered into rails 110 and/or rails 111.

It is now referred to fig. 7 and 8 again. Here it is shown that the ventilated storage containers 6 are stored with their ventilation openings 12 facing towards the ventilation slot 30 when located in a storage column 105 adjacent to the ventilation slot 30.

In the control system 500 for monitoring and controlling the system 1, a unique identifier for each storage container 6, 106 is stored. The control system 500 is configured to determine if the storage container is a ventilated storage container 6 or a non-ventilated storage container 106 based on the unique identifier. In the present embodiment, where each ventilated storage container 6 has either right-side ventilation openings or left-side ventilation openings, a parameter indicative of the location of its ventilation openings are also stored for each storage container 6.

The control system 500 is, based on the above information, configured to determine a storage position for each ventilated storage containers 6, to ensure that the ventilation openings 12 of each ventilated storage container 6 will be positioned facing towards the ventilation slot 30.

Consequently, ventilated storage containers 6 with right-side ventilation openings 12 are stored in storage columns 105 on the left side of the ventilation slot 30, while ventilated storage containers 6 with left-side ventilation openings 12 are stored in storage columns 105 on the right side of the ventilation slot 30.

The illustrated framework structure 100 comprises one ventilation slot 30 for every second storage column 105. In fig. 5 and fig. 6, it is shown that the framework structure 100 comprises one ventilation slot 30 for every second storage column 105 in the first horizontal direction Y, as this is assumed to be a suitable trade-off between effective storage capacity and effective ventilation.

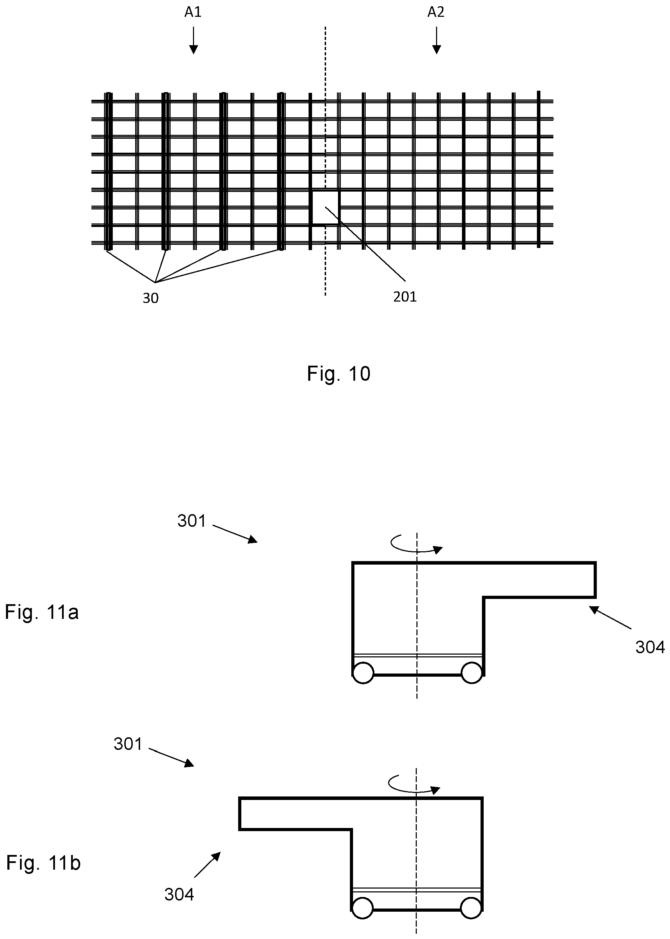

It is now referred to fig. 10. Here it is shown a framework structure from above, divided into a first area A1 and a second area A2. Here, the first area A1 of the framework structure 100 comprises one ventilation slot 30 for every second storage column 105. The second area A2 of the framework structure 100 is provided without ventilation slots 30 between adjacent tracks 111a, 111b, i.e. it is similar to the prior art framework structure of fig. 1. Ventilated storage containers 6 are primarily stored in the first area A1, while non-ventilated storage containers 106 are primarily stored in the second area A2. However, it is possible to store non-ventilated storage containers 106 in the first area A1 and ventilated storage containers 6 in the second area A2. It should be noted that the container handing vehicles 201, 301 are movable freely along the rail system 108 between first and second areas A1, A2.

### Alternative embodiments

In the above embodiments, the storage containers 6 having right-side ventilation openings 12 are stored in storage columns on the left side of the ventilation slot 30, while the storage containers 6 having left-side ventilation openings 12 are stored in storage columns 105 on the right side of the ventilation slot 30.

It is now referred to fig. 11a and fig. 11b. Here it is shown a container handling vehicle 301 of a cantilever type (similar to, but not identical to, the prior art type shown in fig. 3), where the lifting device with the gripping unit 304 being rotatably connected with respect to its wheels. Here, the storage containers 6 with right-side ventilation openings 12 may be converted to storage containers 6 with left-side ventilation openings 12 by rotating the storage containers 180°.

The storage containers 6 may also comprise ventilation openings 12 in two of its side walls 11, the two side walls 11 being opposite side walls. This storage container 6 may be stored in the storage columns 105 on both sides of the ventilation slot, without any 180° rotation.

In the preceding description, various aspects of the automated storage and retrieval system according to the invention have been described with reference to the illustrative embodiment. For purposes of explanation, specific numbers, systems and configurations were set forth in order to provide a thorough understanding of the system and its workings. However, this description is not intended to be construed in a limiting sense. The present invention is defined by the appended claims.

### LIST OF REFERENCE NUMBERS

Prior art (figs 1-4):
- 1: Prior art automated storage and retrieval system
- 100: Framework structure
- 102: Upright members of framework structure
- 103: Horizontal members of framework structure
- 104: Storage grid
- 105: Storage column
- 106: Storage container
- 106': Particular position of storage container
- 107: Stack
- 108: Rail system
- 110: Parallel rails in first direction (X)
- 110a: First rail in first direction (X)
- 110b: Second rail in first direction (X)
- 111: Parallel rail in second direction (*Y*)
- 111a: First rail of second direction (Y)
- 111b: Second rail of second direction (Y)
- 112: Access opening
- 119: First port column
- 120: Second port column
- 201: Prior art storage container vehicle
- 201a: Vehicle body of the storage container vehicle 201
- 201b: Drive means / wheel arrangement, first direction (*X*)
- 201c: Drive means / wheel arrangement, second direction (*Y*)
- 301: Prior art cantilever storage container vehicle
- 301a: Vehicle body of the storage container vehicle 301
- 301b: Drive means in first direction (*X*)
- 301c: Drive means in second direction (*Y*)
- 304: Gripping device
- 500: Control system
- *X*: First direction
- *Y*: Second direction
- *Z*: Third direction

## Claims

1. Automated storage and retrieval system (1) for storing product items (80); wherein the system (1) comprises:
- a framework structure (100) with upright members (102) and horizontal members (103) and a storage volume comprising storage columns (105) between the members (102, 103), wherein the framework structure (100) comprises a rail system (108) arranged above the members (102, 103);
- storage containers (6, 106) in which the product items (80) are stored, wherein the storage containers (6, 106) are stackable in stacks (107) within the storage columns (105), wherein the storage containers comprise ventilated storage containers (6) and non-ventilated storage containers (106), the ventilated storage containers (6) having ventilation openings (12) in a sidewall thereof;
- container handling vehicles (201, 301) moving along the rail system (108) for transporting the storage containers (6, 106),
wherein the rail system (108) comprises rails (110, 111), each rail (110, 111) comprising tracks (110a, 110b, 111a, 111b);
- and wherein adjacent tracks (111a, 111b) of at least one rail (111) of the rail system (108) are separated by a ventilation slot (30) extending in a vertical plane (VP) between two adjacent storage columns (105), **characterised by** the ventilation slot (30) being narrower than the adjacent storage columns (105);
the automated storage and retrieval system further comprising a control system (500) for monitoring and controlling the system (1); wherein:
- the control system (500) comprises a unique identifier for each storage container (6; 106);
- the control system (500) is configured to determine if the storage container is a ventilated storage container (6) or a non-ventilated storage container (106) based on the unique identifier; and
- the control system (500) is configured to determine a storage position for the ventilated storage containers (6) in one of the storage columns (105) in which its ventilation openings (12) will be faced towards the ventilation slot (30), wherein:
- the position of the ventilation slot (30) is stored in the control system (500); and
- the container handling vehicles (201, 301) are configured to determine the position of the ventilation slots (30) during their operation on the rail system (108).

2. Automated storage and retrieval system (1) according to claim 1, wherein the ventilated storage container (6) comprises ventilation openings (12) in at least a side wall (11) facing towards the ventilation slot (30) when located in a storage column (105) adjacent to the ventilation slot (30).

3. Automated storage and retrieval system (1) according to claim 1, wherein the ventilated storage containers (6) comprise ventilation openings (12) in one side wall (11) only, the one side wall having ventilation openings (12) being faced towards the ventilation slot (30) when located in a storage column (105) adjacent to the ventilation slot (30).

4. Automated storage and retrieval system (1) according to any one of the above claims, wherein the ventilation slot (30) has a width (d30) in a first horizontal direction (Y) of 1 - 30%, preferably 5 - 20 %, of the width (d105) in the first horizontal direction (Y) of the adjacent storage column (105).

5. Automated storage and retrieval system (1) according to any one of the above claims, wherein the framework structure (100) comprises one ventilation slot (30) for every second storage column (105).

6. Automated storage and retrieval system (1) according to any one of the above claims, wherein:
- a first area (A1) of the framework structure (100) comprises one ventilation slot (30) for every second storage column (105);
- a second area (A2) of the framework structure (100) is provided without ventilation slots (30) between adjacent tracks (111a, 111b); and
- the container handing vehicles (201, 301) are movable along the rail system (108) between first and second areas (A1, A2).

7. Automated storage and retrieval system (1) according to claim 1, wherein the control system (500) is configured to:
- determine the location of the ventilation openings (12) of the ventilated storage container (6) based on the unique identifier before the storage position is determined.

8. Automated storage and retrieval system (1) according to any one of the above claims, wherein at least one of the container handling vehicles (301) comprises a lifting device with a gripping unit (304), the lifting device with gripping unit (304) being rotatably connected with respect to its first and second sets of wheels (201b, 301b, 201c, 301c).

9. Automated storage and retrieval system (1) according to any one of the above claims, wherein a first track (111a) of the adjacent tracks (111a, 111b) are used by a vehicle moving above one of the adjacent columns (105) and where a second track (111b) of the adjacent tracks (111a, 111b) are used by a vehicle moving above the second one of the adjacent columns (105).

10. Automated storage and retrieval system (1) according to any one of the above claims, wherein the rails (110) in the first horizontal direction (Y) is forming a bridge over the ventilation slot (30) at intervals in a second direction (X) allowing the vehicles to pass the ventilation gap.

## Patentansprüche

1. Automatisiertes Ein- und Auslagersystem (1) zur Lagerung von Produktgegenständen (80),
wobei das System (1) Folgendes umfasst:
- eine Rahmenstruktur (100) mit aufrechten Gliedern (102) und horizontalen Gliedern (103) und einem Lagervolumen, das Lagersäulen (105) zwischen den Gliedern (102, 103) umfasst, wobei die Rahmenstruktur (100) ein über den Gliedern (102, 103) angeordnetes Schienensystem (108) umfasst,
- Lagerbehälter (6, 106), in denen die Produktgegenstände (80) gelagert sind, wobei die Lagerbehälter (6, 106) in den Lagersäulen (105) in Stapeln (107) stapelbar sind, wobei die Lagerbehälter belüftete Lagerbehälter (6) und nicht belüftete Lagerbehälter (106) umfassen, wobei die belüfteten Lagerbehälter (6) Lüftungsöffnungen (12) in einer Seitenwand davon aufweisen,
- Behälterhandhabungsfahrzeuge (201, 301), die sich zum Transport der Lagerbehälter (6, 106) entlang des Schienensystems (108) bewegen,
wobei das Schienensystem (108) Schienen (110, 111) umfasst, wobei jede Schiene (110, 111) Bahnen (110a, 110b, 111a, 111b) umfasst,
- und wobei benachbarte Bahnen (111a, 111b) mindestens einer Schiene (111) des Schienensystems (108) durch einen Lüftungsschlitz (30) getrennt sind, der sich in einer vertikalen Ebene (VP) zwischen zwei benachbarten Lagersäulen (105) erstreckt, **dadurch gekennzeichnet, dass** der Lüftungsschlitz (30) schmaler als die benachbarten Lagersäulen (105) ist,
wobei das automatisierte Ein- und Auslagersystem ferner ein Steuersystem (500) zum Überwachen und Steuern des Systems (1) umfasst, wobei:
- das Steuersystem (500) für jeden Lagerbehälter (6; 106) eine eindeutige Kennung umfasst,
- das Steuersystem (500) dazu ausgestaltet ist, auf der Grundlage der eindeutigen Kennung zu bestimmen, ob der Lagerbehälter ein belüfteter Lagerbehälter (6) oder ein nicht belüfteter Lagerbehälter (106) ist, und
- das Steuersystem (500) dazu ausgestaltet ist, eine Lagerposition für die belüfteten Lagerbehälter (6) in einer der Lagersäulen (105) zu bestimmen, in der seine Lüftungsöffnungen (12) dem Lüftungsschlitz (30) zugewandt sind, wobei:
- die Position des Lüftungsschlitzes (30) in dem Steuersystem (500) gespeichert ist und
- die Behälterhandhabungsfahrzeuge (201, 301) zur Bestimmung der Position der Lüftungsschlitze (30) während ihres Betriebs auf dem Schienensystem (108) ausgestaltet sind.

2. Automatisiertes Ein- und Auslagersystem (1) nach Anspruch 1, wobei der belüftete Lagerbehälter (6) Lüftungsöffnungen (12) in mindestens einer Seitenwand (11) umfasst, die dem Lüftungsschlitz (30) zugewandt ist, wenn er sich in einer Lagersäule (105) neben dem Lüftungsschlitz (30) befindet.

3. Automatisiertes Ein- und Auslagersystem (1) nach Anspruch 1, wobei die belüfteten Lagerbehälter (6) nur in einer Seitenwand (11) Lüftungsöffnungen (12) umfassen, wobei die eine Seitenwand Lüftungsöffnungen (12) aufweist, die dem Lüftungsschlitz (30) zugewandt sind, wenn er sich in einer dem Lüftungsschlitz (30) benachbarten Lagersäule (105) befinden.

4. Automatisiertes Ein- und Auslagersystem (1) nach einem der obigen Ansprüche, wobei der Lüftungsschlitz (30) eine Breite (d30) in einer ersten horizontalen Richtung (Y) von 1 - 30%, vorzugsweise 5 - 20%, der Breite (d105) der benachbarten Lagersäule (105) in der ersten horizontalen Richtung (Y) aufweist.

5. Automatisiertes Ein- und Auslagersystem (1) nach einem der obigen Ansprüche, wobei die Rahmenstruktur (100) einen Lüftungsschlitz (30) für jede zweite Lagersäule (105) umfasst.

6. Automatisiertes Ein- und Auslagersystem (1) nach einem der obigen Ansprüche, wobei:
- ein erster Bereich (A1) der Rahmenstruktur (100) einen Lüftungsschlitz (30) für jede zweite Lagersäule (105) umfasst,
- ein zweiter Bereich (A2) der Rahmenstruktur (100) ohne Lüftungsschlitze (30) zwischen benachbarten Bahnen (111a, 111b) vorgesehen ist, und
- die Behälterhandhabungsfahrzeuge (201, 301) entlang des Schienensystems (108) zwischen dem ersten und dem zweiten Bereich (A1, A2) bewegbar sind.

7. Automatisiertes Ein- und Auslagersystem (1) nach Anspruch 1, wobei das Steuersystem (500) dazu ausgestaltet ist,
- auf der Grundlage der eindeutigen Kennung den Ort der Lüftungsöffnungen (12) des belüfteten Lagerbehälters (6) zu bestimmen, bevor die Lagerposition bestimmt wird.

8. Automatisiertes Ein- und Auslagersystem (1) nach einem der obigen Ansprüche, wobei mindestens eines der Behälterhandhabungsfahrzeuge (301) eine Hebevorrichtung mit einer Greifeinheit (304) umfasst, wobei die Hebevorrichtung mit Greifeinheit (304) bezüglich ihres ersten und zweiten Satzes von Rädern (201b, 301b, 201c, 301c) drehbar verbunden ist.

9. Automatisiertes Ein- und Auslagersystem (1) nach einem der obigen Ansprüche, wobei eine erste Bahn (111a) der benachbarten Bahnen (111a, 111b) von einem Fahrzeug verwendet wird, das sich über einer der benachbarten Säulen (105) bewegt, und wobei eine zweite Bahn (111b) der benachbarten Bahnen (111a, 111b) von einem Fahrzeug verwendet wird, das sich über der zweiten der benachbarten Säulen (105) bewegt.

10. Automatisiertes Ein- und Auslagersystem (1) nach einem der obigen Ansprüche, wobei die Schienen (110) in der ersten horizontalen Richtung (Y) in Abständen in einer zweiten Richtung (X) eine Brücke über dem Lüftungsschlitz (30) bilden, wodurch die Fahrzeuge den Lüftungsspalt passieren können.

## Revendications

1. Système de stockage et de récupération automatisé (1) pour stocker des produits (80) ;
le système (1) comprenant :
- une structure d'ossature (100) avec des éléments verticaux (102) et des éléments horizontaux (103) et un volume de stockage comprenant des colonnes de stockage (105) entre les éléments (102, 103), la structure d'ossature (100) comprenant un système de rails (108) disposé au-dessus des éléments (102, 103) ;
- des récipients de stockage (6, 106) dans lesquels les produits (80) sont stockés, les récipients de stockage (6, 106) pouvant être empilés en piles (107) à l'intérieur des colonnes de stockage (105), les récipients de stockage comprenant des récipients de stockage ventilés (6) et des récipients de stockage non ventilés (106), les récipients de stockage ventilés (6) présentant des ouvertures de ventilation (12) dans une paroi latérale ;
- des véhicules de manutention de récipient (201, 301) se déplaçant le long du système de rails (108) pour transporter les récipients de stockage (6, 106),
le système de rails (108) comprenant des rails (110, 111), chaque rail (110, 111) comprenant des pistes (110a, 110b, 111a, 111b) ;
- et des pistes (111a, 111b) adjacentes d'au moins un rail (111) du système de rails (108) étant séparées par une fente de ventilation (30) s'étendant dans un plan vertical (VP) entre deux colonnes de stockage (105) adjacentes, **caractérisé en ce que** la fente de ventilation (30) est plus étroite que les colonnes de stockage (105) adjacentes ;
le système de stockage et de récupération automatisé comprenant en outre un système de commande (500) pour surveiller et commander le système (1) ;
- le système de commande (500) comprenant un identifiant unique pour chaque récipient de stockage (6 ; 106) ;
- le système de commande (500) étant conçu pour déterminer si le récipient de stockage est un récipient de stockage ventilé (6) ou un récipient de stockage non ventilé (106) sur la base de l'identifiant unique ; et
- le système de commande (500) étant conçu pour déterminer une position de stockage pour les récipients de stockage ventilés (6) dans l'une des colonnes de stockage (105) dans laquelle ses ouvertures de ventilation (12) feront face à la fente de ventilation (30),
- la position de la fente de ventilation (30) étant mémorisée dans le système de commande (500) ; et
- les véhicules de manutention de récipient (201, 301) étant conçus pour déterminer la position des fentes de ventilation (30) pendant leur fonctionnement sur le système de rails (108).

2. Système de stockage et de récupération automatisé (1) selon la revendication 1, le récipient de stockage ventilé (6) comprenant des ouvertures de ventilation (12) dans au moins une paroi latérale (11) faisant face à la fente de ventilation (30) lorsqu'il est situé dans une colonne de stockage (105) adjacente à la fente de ventilation (30).

3. Système de stockage et de récupération automatisé (1) selon la revendication **1,** les récipients de stockage ventilés (6) comprenant des ouvertures de ventilation (12) dans une paroi latérale (11) seulement, la paroi latérale ayant des ouvertures de ventilation (12) faisant face à la fente de ventilation (30) lorsqu'ils sont situés dans une colonne de stockage (105) adjacente à la fente de ventilation (30).

4. Système de stockage et de récupération automatisé (1) selon l'une quelconque des revendications précédentes, la fente de ventilation (30) présentant une largeur (d30) dans une première direction horizontale (Y) de 1 à 30 %, de préférence de 5 à 20 %, de la largeur (d105) dans la première direction horizontale (Y) de la colonne de stockage (105) adjacente.

5. Système de stockage et de récupération automatisé (1) selon l'une quelconque des revendications précédentes, la structure d'ossature (100) comprenant une fente de ventilation (30) pour une colonne de stockage (105) sur deux.

6. Système de stockage et de récupération automatisé (1) selon l'une quelconque des revendications précédentes,
- une première zone (A1) de la structure d'ossature (100) comprenant une fente de ventilation (30) pour une colonne de stockage (105) sur deux ;
- une seconde zone (A2) de la structure d'ossature (100) étant fournie sans fentes de ventilation (30) entre des pistes (111a, 111b) adjacentes ; et
- les véhicules de manutention de récipient (201, 301) étant mobiles le long du système de rails (108) entre une première et une seconde zone (A1, A2).

7. Système de stockage et de récupération automatisé (1) selon la revendication 1, le système de commande (500) étant conçu pour :
- déterminer l'emplacement des ouvertures de ventilation (12) du récipient de stockage ventilé (6) sur la base de l'identifiant unique avant de déterminer la position de stockage.

8. Système de stockage et de récupération automatisé (1) selon l'une quelconque des revendications précédentes, au moins l'un des véhicules de manutention de récipient (301) comprenant un dispositif de levage doté d'une unité de préhension (304), le dispositif de levage doté d'une unité de préhension (304) étant relié de manière rotative par rapport à ses premier et second jeux de roues (201b, 301b, 201c, 301c).

9. Système de stockage et de récupération automatisé (1) selon l'une quelconque des revendications précédentes, une première piste (111a) des pistes (111a, 111b) adjacentes étant utilisée par un véhicule se déplaçant au-dessus de l'une des colonnes (105) adjacentes et une seconde piste (111b) des pistes (111a, 111b) adjacentes étant utilisée par un véhicule se déplaçant au-dessus de la seconde des colonnes (105) adjacentes.

10. Système de stockage et de récupération automatisé (1) selon l'une quelconque des revendications précédentes, les rails (110) dans la première direction horizontale (Y) formant un pont au-dessus de la fente de ventilation (30) à des intervalles dans une seconde direction (X) permettant aux véhicules de passer l'espace de ventilation.
